Europäisches Patentamt

(19) European Patent Office

Office européen des brevets

(11) Publication number: **0 309 244 B1**

# (12) EUROPEAN PATENT SPECIFICATION

(45) Date of publication of patent specification:
20.03.91 Bulletin 91/12

(51) Int. Cl.⁵: **C10G 11/18, B01J 8/26**

(21) Application number: 88308798.3

(22) Date of filing: 22.09.88

(54) Fluid catalytic cracking regeneration with spent catalyst separator.

(30) Priority: 22.09.87 US 99859

(43) Date of publication of application:
29.03.89 Bulletin 89/13

(45) Publication of the grant of the patent:
20.03.91 Bulletin 91/12

(84) Designated Contracting States:
BE DE FR GB IT NL

(56) References cited:
DE-A- 3 700 903
US-A- 4 118 337
US-A- 4 448 753
US-A- 4 574 044

(73) Proprietor: MOBIL OIL CORPORATION
150 East 42nd Street
New York New York 10017 (US)

(72) Inventor: Avidan, Amos Andrew
2120 Stackhouse Drive
Yardley, PA 19067 (US)
Inventor: Chou, Tai-Sheng
207 Burd Street
Pennington, NJ 08534 (US)

(74) Representative: Jones, Alan John et al
CARPMAELS & RANSFORD 43 Bloomsbury
Square
London, WC1A 2RA (GB)

## Description

This invention relates to fluid catalytic cracking and more particularly to the regeneration of the cracking catalyst.

The fluid catalytic cracking (FCC) process has become the preeminent cracking process in the petroleum refining industry for converting higher boiling petroleum fractions into lower boiling products, especially gasoline.

In FCC a finely divided cracking catalyst is used to promote the cracking reactions which take place in the reactor. The catalyst is used in a very finely divided form, typically with a particle size range of 20-300 microns ($\mu$m), with an average of about 60-75 microns ($\mu$m), in which it can be handled as a fluid and in this form it is circulated in a closed cycle between a cracking zone and a separate regeneration zone. In the cracking zone, hot catalyst is brought into contact with the feed so as to effect the desired cracking reactions after which the catalyst is separated from the cracking products which are removed from the cracking reactor to the associated fractionation equipment for separation and further processing. During the cracking reaction, coke is deposited on the catalyst and this deposit of coke deactivates the catalyst so that it needs to be regenerated before it can be reused. Fortunately, the coke deposit can be made to serve a useful purpose. Cracking is an endothermic reaction which requires the input of significant amounts of heat in order to carry the cracking reactions to the desired extent. Although some heat is supplied by preheating the feed prior to contact with the catalyst not all the heat required for cracking is supplied this way because this would result in a significant degree of unselective thermal cracking so that very little control could be exercised over the product distribution ; in addition, considerable coking would occur in the furnace and other equipment used for heating and conveying the feed to the cracker. For this reason, it is generally preferred to supply the heat to the cracking reaction zone by means of the catalyst, although the feed may be preheated to a certain degree in order to maintain an appropriate heat balance in the cycle. Heat for the process is supplied by the regeneration step in the cycle in which the spent catalyst is subject to oxidative regeneration so as to remove the carbon deposits accumulated during the cracking step and to supply heat to the catalyst by the exothermic oxidation reactions which take place during regeneration.

The regeneration takes place in a separate regenerator vessel in which the catalyst is maintained in a fluidized bed into which an oxygen-containing gas, usually air, is admitted through a distribution grid which is designed to provide efficient mixing of air with the coke-containing catalyst. During the regeneration step, the coke on the spent catalyst is oxidized and the heat from the oxidation reaction is transferred to the catalyst to raise its temperature to the requisite level for continuing the cracking reactions. The hot, freshly-regenerated catalyst is then returned to the cracking zone for contact with further feed together with any recycle. Thus, the catalyst circulates continuously in a closed cycle between the cracking zone and the regenerating zone with heat for the endothermic cracking reactions being supplied in the regenerator by oxidative removal of the coke deposits which are laid down during the cracking portion of the cycle. In order to maintain the desired level of catalyst activity and selectivity, a portion of the circulating inventory of catalyst may be withdrawn intermittently or continuously with fresh, make-up catalyst being added to compensate for the withdrawn catalyst and the catalyst losses which occur through attrition and loss of catalyst from the system.

A further description of the catalytic cracking process and the role of regeneration may be found in the monograph, "Fluid Catalytic Cracking With Zeolite Catalysts", Venuto and Habib, Marcel Dekker, New York, 1978. Reference is particularly made to pages 16-18, describing the operation of the regenerator and the flue gas circuit.

Two main types of FCC regenerator are now in general use. The first type is the dense bed type regenerator in which the catalyst enters the regenerator from the reactor and combustion is induced in a dense bed of catalyst by means of combustion air which is injected from below. Typical regenerators of this type are shown, for example, in 1984 Refining Process Handbook, "Hydrocarbon Processing", Sept., 1984, pp. 108-109, Venuto and Habib, op cit p. 17 and US-A-4,072,600 and 4,300,997. In regenerators of this type, a dense bed of catalyst is fluidized by the injected air with a dilute phase of catalyst above the dense bed. In one variant of this type of regenerator, the spent catalyst from the reactor is introduced tangentially into the dense bed of catalyst to impart a swirling motion to the dense bed so that the catalyst moves in an approximately circular path during regeneration until it is removed through a discharge port below the top of the dense bed. In order to ensure a sufficiently long average residence time in the regenerator, the discharge port is positioned around the vertical axis of the regenerator from the catalyst inlet port. An angular separation of 270° measured in the direction of swirl is typical. The relative high volume of catalyst in the regenerator ensures that the average residence is longer than that required to make one circuit of the regenerator so that some of the hot, regenerated catalyst will continue in the swirling bed to mingle with the spent catalyst from the reactor so as to promote the combustion of the coke deposits on the newly added spent catalyst.

The gases passing through and rising from the dense bed carry with them a portion of the catalyst from the dense bed and this produces a dilute phase of suspended catalyst above the dense bed. The dilute phase passes to cyclone separators at the top of the regenerator vessel where the catalyst is removed, to be returned to the dense bed through diplegs attached to the cyclones. The effluent gases from the regenerator are then discharged from the unit.

When this type regenerator is operated in the CO combustion mode, a CO combustion promoter such as platinum or another noble metal is conventionally provided in the catalyst, either as a component of the catalyst itself, or, more usually, as an additive. The use of CO combustion promoters is described in US-A-4,072,600. The effluent gases contain relatively higher amounts of carbon dioxide so that a CO boiler no longer serves any purpose, although waste heat recuperators are typically provided to recover the sensible heat of the regenerator effluent gases. With essentially complete combustion of the carbon monoxide in the regenerator, substantially all of the heat which is potentially recoverable from the coke deposited on the catalyst is returned to the catalyst with the result that the unit operates in a thermally balanced mode with minimal feed preheat requirements, as compared to the earlier mode of operation in which significant quantities of heat were recovered in the down stream CO boiler.

The second principal type of regenerator is the combustor type regenerator in which combustion of the coke on the spent catalyst is initiated and carried through to a significant degree in a dense bed of relatively small volume, after which the entrained catalyst together with effluent gases from the dense bed is passed up a riser in which combustion of the carbon monoxide takes place with a resultant, highly efficient transfer of heat from the CO oxidation reaction to the catalyst in the riser. The presence of the catalyst in the region where the CO oxidation takes place prevents damage to the regenerator equipment because the catalyst acts as a heat sink for the CO oxidation reaction and, in this way, the dual objectives of obtaining a clean-burned catalyst and of maintaining structural integrity of the regenerator equipment are assured. In this type of regenerator, recycle of the hot regenerated catalyst from the top of the riser to the dense bed is provided in order to provide an adequately high temperature in the dense bed for rapid combustion of the coke on the spent catalyst. Regenerators of this type are described in US-A-3,926,778 and high-efficiency regenerator type units of this type have enjoyed a significant commercial success. A regenerator of this type is also shown in US-A-4,072,600 (Fig. 4), since the use of a CO oxidation promoter is desirable for this type of regenerator as with the more conventional dense bed regenerator.

Before entering the regenerator from the cracking reactor the catalyst is conventionally stripped of occluded hydrocarbons in a stripping section at the bottom of the reactor vessel. Hydrocarbon can be physically adsorbed on the catalyst surface, or carried in the porous volume of the catalyst, or in the interstices between the catalyst particles. In the stripping section, the catalyst is contacted with steam typically at a temperature of 800-1000°F (427-538°C) with good contact between the stripping steam and the catalyst being ensured by means of baffles in the stripper, which provide a staged travel path for the catalyst and also agitate the catalyst in its travel through the stripper. Stripping, however, is frequently incomplete and the catalyst which passes out of the stripper to the regenerator often contains quantities of entrained hydrocarbons. As much as 50% by volume or even more, of these entrained hydrocarbons may not be stripped, but pass into the regenerator. This is undesirable not only because it represents a waste of valuable product but also because the entrained hydrocarbons will be burned in the regenerator, thereby putting an additional load on the regenerator air supply. The combustion of the entrained hydrocarbons in the regenerator also increases the water partial pressure in the regenerator because these hydrocarbons have a relatively high hydrogen content relative to the coke on the spent catalyst and when they are burned, relatively more water is produced than by the combustion of the coke. This increased water partial pressure in the regenerator promotes the hydrothermal deactivation of the zeolitic cracking catalysts.

Other problems associated with the operation of conventional dense bed FCC regenerators include maldistribution of the spent catalyst as it enters the regeneration zone with the result that oxygen starvation occurs near the catalyst inlet with increased production of sulfur oxides ($SO_x$) and a region of excess oxygen near the regenerating catalyst outlet which results in increased nitrogen oxides ($NO_x$) emission. These problems of maldistribution may be resolved at least partly for any given regenerator by adjusting the air distribution but because this represents an inefficient use of the regenerator, it would clearly be better to improve the uniformity of the bed operation in some other manner. In this way, $SO_x$ and $NO_x$ emissions could be reduced with a smaller volume of catalyst in the regenerator, thereby reducing catalyst make-up requirements.

We have now devised an operating technique for FCC units which improves the regenerator operation and hence the operation of the unit as a whole.

According to the present invention a method of regenerating coked fluid cracking catalyst comprises removing hydrocarbons from the catalyst by contact with a stripping gas, transferring the stripped catalyst by means of a flowing stream of gas to a gas/solids separator, further hydrocarbons being removed from the catalyst by

EP 0 309 244 B1

said stream during the transfer, separating the catalyst from the stream and said further hydrocarbons in the separator, and oxidatively regenerating the separated catalyst. According to the preferred practice of the invention, the spent cracking catalyst from the cracking reactor is separated from entrained hydrocarbons in one or more separators, usually cyclone separators, before it is passed to the regeneration bed in which it is oxidatively regenerated. In the separator or separators, the spent catalyst is separated from hydrocarbons which remain entrained with the catalyst after leaving the reactor vessel or a separate stripper. Separation of the catalyst particles from the hydrocarbons is promoted by the use of a desorbent gas which may also be used to increase the superficial velocity of the particles to a value which promotes separation in the selected type of separator e.g. 50-100 ft./sec. (15.25-30.5 m/s) for a cyclone separator. Although this advantage of the technique may be secured with only one separator in or outside the regenerator vessel, it is preferred to employ a number of separators within the actual regenerator vessel which each receive spent catalyst from the reactor and separate it from entrained gases before passing the catalyst into the regeneration zone in which the spent catalyst is contacted with air or another oxygen containing regeneration gas to remove the coke from the catalyst. By using a number of cyclone separators within the body of the regenerator itself, the incoming spent catalyst may be distributed more evenly throughout the regeneration zone so that regions of oxygen excess or shortage are eliminated, with the result the $SO_x$ and $NO_x$ production is reduced. In addition, removal of hydrocarbons before the spent catalyst enters the regeneration zone reduces the load on the regenerator air supply and also reduces the water partial pressure in the regenerator so that catalyst deactivation and make up rates are reduced. Further improvements in regenerator efficiency may be noted, including lower regenerator temperatures attributed to reduced combustion in the regenerator, and this permits higher catalyst circulation to be employed with a higher yield of gasoline and distillate.

The FCC regenerator, according to an embodiment of the present invention, comprises a regeneration vessel which contains a dense fluidized bed of catalyst undergoing regeneration with an oxygen-containing combustion gas which maintains the bed in a fluidized state to produce regeneration effluent gases which leave the regenerator vessel through an outlet for these effluent gases. A catalyst inlet is provided for the spent catalyst from the cracking reactor and this inlet is connected to one or more cyclone separators for separating the spent catalyst particles from gases entrained with the catalyst. It is preferred to use a number of separator cyclones, with their diplegs for passing the separated, coked catalyst particles into the dense bed regeneration zone at a number of points across the cross-section of the regeneration zone so as to provide greater uniformity of composition in the dense bed. The catalyst is preferably transferred from the reactor or stripper by means of a lift pipe in which the catalyst particles are elevated in a vertical direction by means of a lift gas which promotes desorption of the entrained hydrocarbons as well as increasing the superficial velocity of the particles to a value suitable for the separator cyclones.

In order to ensure that the load on the regenerator is reduced to the greatest possible extent, it is preferred to maintain the gases separated from the spent catalyst in the cyclone separators apart from the gases in the regenerator vessel as a whole and for this purpose, the gas outlets of the cyclone separators are preferably provided with conduits connected to the effluent gas outlet of the regenerator vessel. The regenerator vessel may be vented to the effluent gas outlet through this conduit by providing a vent in the conduit or, alternatively, the regenerator may be vented through a separate cyclone system. The spent catalyst separator cyclone system preferably employs primary and secondary cyclone separators so as to effect the greatest separation between the spent catalyst particles and the entrained gases. The primary and secondary separator cyclones are linked by means of a conduit which may include a vent for the regeneration effluent gases from the regeneration zone.

In the accompanying drawings :

Figure 1 is a simplified illustration of an FCCU including spent catalyst cyclone separators employing an external lift pipe for elevating the spent catalyst to the cyclones,

Figure 2 is a simplified illustration of an FCCU with an internal lift pipe for elevating the spent catalyst to the cyclones.

Figures 3 and 3A are simplified illustrations of an FCCU with a combustor type regenerator and an external separator, and

Figure 4 is a simplified illustration of in inertial type solids/gas separator.

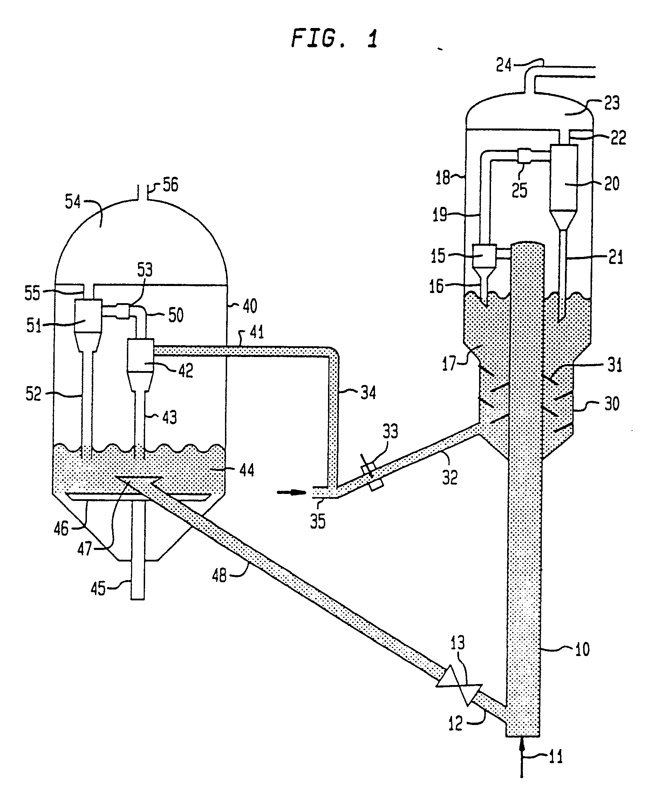

Figure 1 shows an FCCU which has a riser reactor 10 into which cracking feed is admitted through feed inlet 11 to contact freshly regenerated catalyst which enters through catalyst inlet 12 with the rate of catalyst admission being regulated by control valve 13. The feed is cracked in the conventional manner as it passes up the riser with a residence time in the riser typically up to 10 seconds. At the top of the rise the spent catalyst and cracking products are separated in a riser cyclone 15 which is fitted with a dipleg 16 to return separated spent catalyst particles to the dense bed of spent catalyst 17 at the bottom of reactor vessel 18. The term "reactor" is actually a misnomer since the reactor serves mainly to disengage the spent catalyst particles from the

4

cracking vapors rather than to effect a significant degree of reaction between the catalyst and the hydrocarbons which are present in the reactor. In fact, reactor cracking is undesired since it tends to be non-selective in nature and for this reason, the reactor is usually designed and operated so as to minimize the extent of cracking which takes place in it. Nevertheless, the term "reactor" is conventionally employed to designate the vessel surrounding the top of the cracking riser and for this reason is employed in this specification. The cracking vapors separated from the spent catalyst particles in riser cyclone 15 pass through conduit 19 into reactor cyclone 20 where a further separation of entrained catalyst particles from the cracking vapors is made with the separated catalyst particles being returned through reactor cyclone dipleg 21 to dense bed 17 at the bottom of the reactor vessel. Cracking vapors separated from catalyst particles in cyclone 20 are removed from their reactor through the gas outlet of the reactor cyclone by way of conduit 22 which communicates with reactor plenum 23 which is connected through conduit 24 to the product recovery system including the fractionator (not shown). Closed cyclone systems of this type in the reactor vessel are described in US-A-4,502,947 and 4,654,060, to which reference is made for a description of them and their mode of operation. An annular vent 25 is provided in the conduit connecting the riser cyclone to the reactor cyclone, as described in US-A-4,502,947 and 4,654,060, for venting the reactor. However, other venting arrangements may be used, for example, a separate cyclone exclusively for venting the reactor with completely closed conduits connecting the riser cyclone to the reactor cyclone and the reactor cyclone to the plenum.

A stripping section 30 is provided at the bottom of reactor vessel 18 in which the catalyst is stripped from hydrocarbon vapors by means of steam or another stripping gas e.g., flue gas, with contact between the stripping gas and the catalyst being ensured by means of baffles 31 which provide a staged travel path for the catalyst and redistribute stripping gas and catalyst in its path through the stripper. Hydrocarbon vapors removed during the stripping process together with stripping gas are removed from the reactor vessel through annular vent 25 in conduit 19. Alternatively a separate reactor cyclone for stripper effluent may be provided and in this case a completely closed conduit linking the riser and reactor cyclones may be provided as described above. Stripped catalyst is withdrawn from the stripper through catalyst standpipe 32 with the rate of withdrawal being controlled by means of a control valve 33. The catalyst passes downwards in standpipe 32 to the foot of lift pipe 34 which is also provided with a lift gas inlet 35. The lift gas serves to desorb or remove the hydrocarbons entrained with the catalyst and also increases the superficial velocity of the catalyst to a value appropriate for cyclone separation. The catalyst is elevated in lift pipe 34 by means of lift gas admitted through inlet 35. The spent catalyst particles enter the regenerator vessel 40 by way of spent catalyst inlet conduit 41. The spent catalyst together with lift gas and entrained hydrocarbons enters a primary cyclone separator 42 in the regenerator which effects a preliminary separation of the spent catalyst from the lift gases and entrained steam and hydrocarbons which have not been removed by the stripping in the reactor vessel. The separated spent catalyst leaves the primary cyclone through dipleg 43 and enters the dense, fluidized bed regeneration zone 44 in which the coke on the spent catalyst is oxidatively removed by contact with the oxygen containing regeneration gas admitted through regeneration gas inlet 45 and distributor grid 46. Regenerated catalyst is removed from the regenerator vessel by means of regenerated catalyst outlet 47 connected to conduit 48 which returns regenerated catalyst to the foot of riser 10 by way of control valve 13 and inlet 12.

Gases separated from spent catalyst in primary cyclone 42 pass through conduit 50 into secondary cyclone separator 51 where a further separation of catalyst particles from gases takes place with separated catalyst particles being returned thorough secondary cyclone dipleg 52 to dense bed regeneration zone 44. Regeneration effluent gases produced by the oxidative regeneration of the catalyst in bed 44 are vented from the regenerator vessel through annular vent 53 in conduit 50. This annular vent 53 is similar in construction and operation to annular vent 25 in the reactor closed cyclone system described above. Gases separated from the catalyst particles in secondary regenerator cyclone 51 pass into regenerator plenum 54 through conduit 55. The plenum has an effluent gas outlet 56 for the effluent gases both from the regeneration zone and from the spent catalyst lift pipe. Because the effluent gases leaving the regenerator vessel contain quantities of hydrocarbons removed from the spent catalyst in the lift pipe and the regenerator catalyst separation system, the effluent gases may be passed to a waste heat boiler or CO boiler for recovery of the fuel values contained in them.

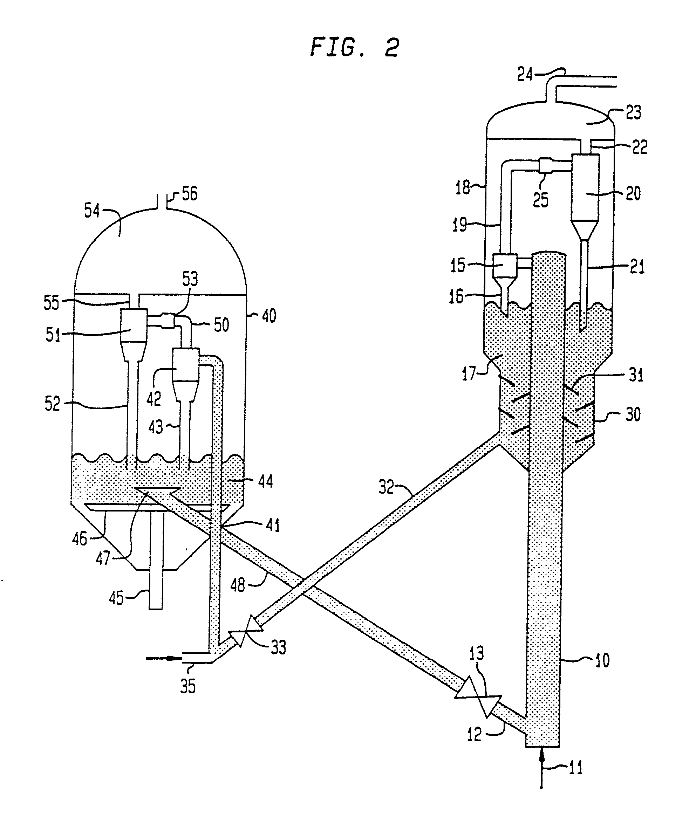

Significant separation of the entrained hydrocarbons from the coked catalyst particles occurs in the lift pipe to the regenerator cyclones so that a significant amount of free hydrocarbons are present in the gases which enter the regenerator cyclones from the lift pipe. In order to segregate these gases from the regeneration effluent gases present above the dense bed in the regenerator vessel, it is preferred to use a closed cyclone system as described above in which the gases separated from the catalyst are not mixed with the regeneration effluent gases in the dilute phase above the dense bed regeneration zone. The closed cyclone system described above which achieves this result is similar to the closed cyclone system used in the FCC reactor as described in US-A-4,502,947 and 4,654,060 referred to above. If desired, the separated hydrocarbon gases may be kept completely isolated from the regenerated gases by providing a completely closed cyclone system, that is, with a conduit from the gas outlet of the primary separator cyclone in the regenerator leading to the inlet of the secondary cyclone and with a closed conduit from the gas outlet of the secondary cyclone to the plenum of the regenerator. In this case, the regenerator vessel will need to be separately vented to provide an outlet for the regeneration effluent gases and for this purpose a separate system of regenerator cyclones will be provided to separate the particles of catalyst from the regeneration effluent gases with the effluent gases being led to the downstream processing units in the normal manner. A compromise system is shown in Figures 1 and 2 above in which the hydrocarbon-containing gases separated from the spent catalyst are not permitted to enter the main body of the regeneration vessel but are exhausted through a closed cyclone system which includes a vent for the regeneration effluent gases. The vent shown is an annular vent as described in US-A-4,502,947 and 4,654,060. Thus, the regeneration effluent gases are mixed with the hydrocarbon-containing gases separated from the spent catalyst and the combined gases are then led to a waste heat boiler or CO boiler for recovery of the fuel values. Because the $C_5+$ effluent separated from the catalyst in the separator is highly aromatic in character (typically at least 90 percent aromatic) and therefore of low distillate quality, it is normally preferred not to collect it as a cracking product, particularly since it would tend to load up the wet gas plant if passed with the lift gas from the separators to the reactor. However, the separated hydrocarbons may be passed directly out of the regenerator vessel by a closed cyclone system as described above for recovery as a chemical product if the composition is suitable for this purpose.

A similar FCCU is shown in Fig. 2 fitted with an internal lift pipe from the catalyst standpipe to the primary separator cyclone in the regenerator. This type of installation is more readily accommodated in a new unit whereas the external lift pipe system shown in Fig. 1 can be more readily incorporated into an existing unit. The unit shown in Fig. 2 operates in the same way as the previous unit and for this reason the parts are given the same reference numerals.

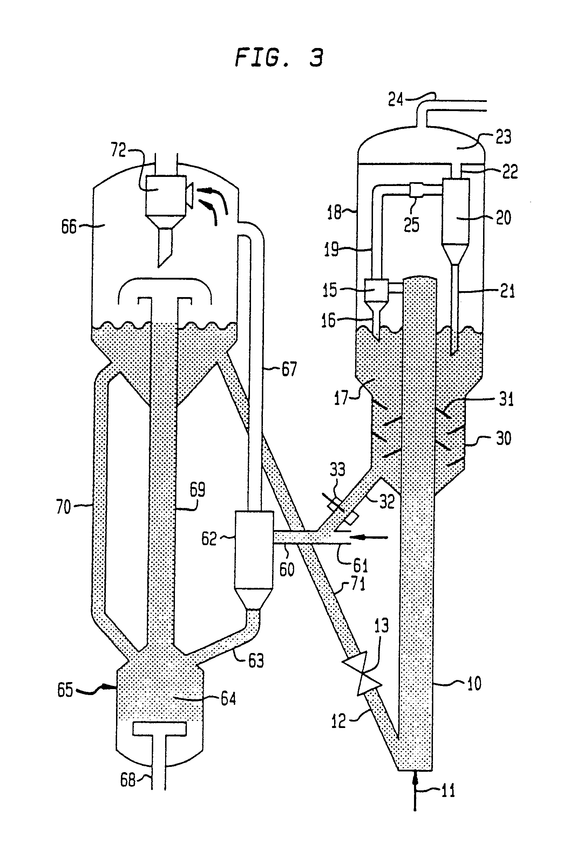

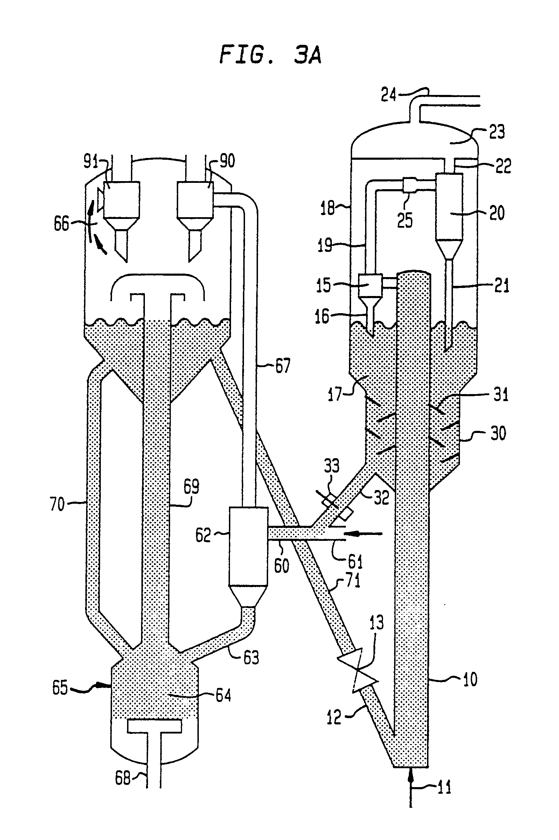

The present method of hydrocarbon desorption has the advantages, as described above, of reducing catalyst deactivation as well as of reducing $NO_x$ and $SO_x$ levels in the regenerator off-gas. Because these problems are particularly intractable in the dense bed type regenerator, the present technique is of particular utility with this type of regenerator. However, it may also be employed with circulatory combustor type regenerators as shown in Figure 3. In Fig. 3 the cracking section of the unit is the same as that shown in Figs. 1 and 2 and it functions in the same way ; accordingly the parts are designated identically. The spent catalyst leaves the stripper 30 through standpipe 32 as described above with catalyst flow rate regulated by control valve 33. Standpipe 32 enters a horizontal flow pipe 60 into which a gas stream is injected concurrent with the catalyst flow through inlet 61. The gas functions the same as the lift gas in the units described above and increases the superficial velocity of the catalyst stream to a value typically 50-100 ft/sec (15.25-30.5 m/s), appropriate for separation in cyclone separator 62 which has its inlet connected to conduit 60. The catalyst is separated from the desorbed hydrocarbons and desorption gas in cyclone 62 with the catalyst particles passing out of cyclone 62 by way of standpipe 63 into the lower dense bed regeneration zone 64 of a combustor type regenerator 65. The desorbed hydrocarbons together with gas injected at inlet 61 passes out of the gas outlet of cyclone 62 and is conveyed into the disengaging zone 66 at the top of regenerator 65 by conduit 67 and there combines with the regeneration off-gases.

The desorbed gases may be kept separate from the regeneration off-gases by using a closed cyclone system analogous to that shown in Fig. 2. A system of this kind is shown in Fig. 3A which is essentially similar to the system of Fig. 3 (and identical parts are therefore identified by the same reference numerals) except that conduit 67 is linked directly to cyclone separator 90 in order to separate the desorbed hydrocarbons from entrained catalyst particles which are then returned to the upper dense bed in disengaging zone 66 in the regenerator. The regeneration off-gases are vented separately from disengaging vessel 66 through cyclone 91.

The combustor regenerator 65 operates in the manner described in US-A-3,926,778, 3,893,812 and 3,898,050, to which reference is made for a description of it. Briefly, regeneration by combustion of the coke takes place in the lower dense bed regeneration zone 64 with combustion gas entering through inlet 68. The catalyst then passes up riser 69 in which combustion of carbon monoxide is completed with the heat of combustion being transferred to the catalyst to increase its temperature. The regenerated catalyst is separated from the regeneration off-gases in disengaging zone 66 and forms a dense fluidised bed of regenerated catalyst at the bottom of the zone. A portion of the regenerated catalyst is withdrawn from the dense bed and recycled to the lower dense bed through recycle conduit 70 to maintain an adequate temperature in this bed ; the remainder passes back to the cracking section through catalyst return pipe 71. Regeneration off-gases pass out of disengaging zone 66 through regeneration cyclone 72.

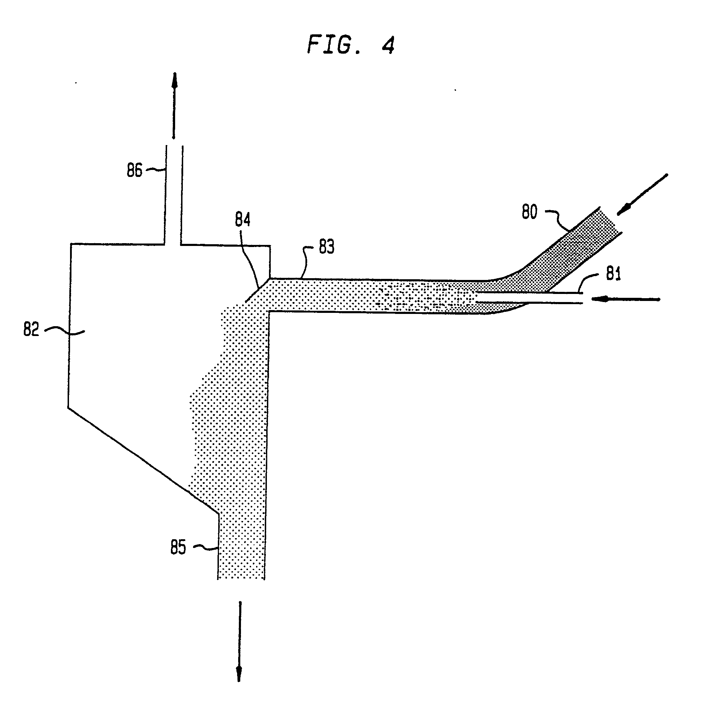

Although cyclone type separators constitute the preferred type of separation device for removing the catalyst particles from desorption gas and desorbed hydrocarbons, other types of separator e.g. inertial separators may be used. An inertial separator especially suitable for use in a unit of the type shown in Fig. 3 is illustrated in simplified form in Fig. 4. Catalyst from the FCC reactor or external stripper is received through standpipe 80 and a stream of desorption gas flows into the catalyst steam through inlet 81 to increase its superficial velocity and remove the entrained hydrocarbons. The separator comprises an upright cylindrical drum 82 into which conduit 83 extends in a horizontal direction. A baffle 84 is disposed across the mouth of conduit 83 to cause the mixture of catalyst and gas to make an abrupt change of direction as it enters separator drum 82. The change in direction effects an inertial separation of the catalyst particles which fall towards catalyst outlet 85 with the separated gases leaving through gas outlet 86. The efficiency of the separator will determine the extent to which the advantages of the present technique are secured and accordingly the actual type of separator employed may be selected in accordance with the degree of improvement desired.

As described above, the stripper at the bottom of the typical FCC reactor vessel is not completely effective, the spent catalyst leaving it carrying a considerable portion of strippable hydrocarbons. These are partly released in the spent catalyst standpipe and if desired a second stage stripper can then be returned to the FCC reactor vessel and collected in the product recovery system. The introduction of the lift gas in the riser to the regenerator cyclones or other desorbent gas promotes additional stripping because of the reduction in the partial pressure of hydrocarbons. Typical gases for this purpose include steam, flue gas, flue gas mixed with air or air alone. If oxidative mixtures such as air or flue gas mixed with air are used, regeneration may commence in the lift pipe with the release of heat from the combustion of the coke. In this case, the degree of combustion must be controlled in order to avoid exceeding metallurgical constraints on the regenerator separator cyclones and associated equipment. For this purpose, the composition of the lift gas may be varied, e.g., by admixture with additional quantities of flue gas in order to maintain the desired inlet temperature at the inlet of the regenerator separator cyclones. Because the lift gas significantly reduces the partial pressure of the hydrocarbons, the unburned hydrocarbons separated at this stage can be greater than 18% of the total coke, as shown in Table 1 below, which gives the typical standpipe samplings for liquid and vapor hydrocarbons at about 59 and 41 volume percent for steam and hydrocarbons, respectively.

## TABLE 1

### Commercial FCC Sampling At The Spent Catalyst Standpipe

| | |
|---|---|
| Unit Charge Rate | 45,500 BPD (7234 m$^3$/day) |
| Catalyst Circ. Rate | 21.0 Ton/min (19 tonnes/min) |
| Total Coke Yield | 20,300 lb/hr (9208 kg/hr) |
| Stripping Steam Rate | 5800 lb/hr (2630 kg/hr) |
| Temp at Spent Standpipe | 957°F (515°C) |

### Sampling Results:

| | |
|---|---|
| Rate of Strippable HC | 3650 lb/hr (1655 kg/hr) |
| Including a) Liquid HC* | 1563 lb/hr (709 kg/hr) |
| b) Vapor HC | 2087 lb/hr (947 kg/hr) |

Hydrogen Content

| | |
|---|---|
| in Strippable HC | 15.11 wt.% |
| in Coke | 7.15 wt.% |

Composition of the sample collected

| | Wt. g. | Molecular Wt. | Vol. % |
|---|---|---|---|
| Water | 442 | 18 | 59.3 |
| Liquid HC* | 396 | 254 | 3.8 |
| Vapor HC | 529 | 34.6 | 36.9 |

### Strippable HC Contribution

| | |
|---|---|
| % of Total Coke | 18 |
| % of Heat Released in Regenerator | 20.2 |
| % of H$_2$O Produced in Regenerator | 31.7 |

* at 60°F (15°C)

The use of recycled flue gas, preferably from the regenerator, is preferable because it allows a decrease in the flue gas temperature which eliminates the possibility of CO afterburning in the primary and secondary regenerator cyclones. Another lift gas which is capable of desirably affecting the operation of the FCCU is steam. As described in US-A-4,574,044, prolonged contact between the coke-containing catalyst and steam is capable of causing an interaction between the coke and the steam which increases removal of adsorbed hydrocarbons. This reaction may be carried out either in an extended contact time steam stripper as described in US-A-4,574,044 or in a lift pipe using steam as lift gas as in the present units. The use of an extended contact time steam stripper is also useful with other lift gases such as flue gas as the steam stripping will be expected to bring about some conversion of coke to more volatile hydrocarbons which are then desorbed in the lift pipe by the selected lift gas.

In the dense bed type regenerator as shown in Figs. 1 and 2, the spent catalyst which is separated from the entrained hydrocarbons and lift gas in the regenerator separator cyclones descends through the cyclone diplegs which are preferably disposed across the cross-section of the regenerator vessel to distribute the spent catalyst evenly throughout the dense bed regeneration zone. This solves a major design problem inherent in many dense bed regenerators where the catalyst is introduced tangentially or in cross flow fashion at one point from the inlet connected to the spent catalyst standpipe. Maldistribution of carbon level is a well known problem and various solutions such as air grid plugging and baffles have been tried, but either with only partial success

EP 0 309 244 B1

or with a decrease in the efficiency of the regenerator. Air grid plugging is a particularly inefficient way of solving the maldistribution problem because it implies that the regenerator is being used at somewhat less than its maximum effectiveness. The present spent catalyst separation system is particularly favourable for solution of the maldistribution problem because it enables the spent catalyst to be distributed into the dense bed in the most favorable manner so that the oxygen distribution and catalyst distribution can be brought into conformity with one another to produce a uniform bed composition. As discussed above, greater uniformity in bed composition may promote decreased $SO_x$ and $NO_x$ emissions and the improvements provided by the present catalyst separation technique enable these emissions to be reduced while improving the overall efficiency of the regenerator.

Separation of the strippable hydrocarbons from the spent catalyst using the regenerator separator cyclones reduces hydrothermal deactivation of the equilibrium catalyst with a consequent reduction in the catalyst make up rate because the total amount of water vapor produced in the regenerator is greatly reduced. Table 1 above shows that the hydrogen content for the strippable hydrocarbons (15.11 wt.%) is much higher than that of the total coke (7.15 wt.%) so that the strippable hydrocarbons (18 wt.% of the total coke) contribute to about 32 wt.% of the total water vapor produced in the regenerator. The separation of the strippable hydrocarbons and the entrained stripping steam therefore enables the water partial pressure in the regenerator to be significantly reduced.


## Claims

1. A method of regenerating coked fluid cracking catalyst which comprises removing hydrocarbons from the catalyst by contact with a stripping gas, transferring the stripped catalyst by means of a flowing stream of gas to a gas/solids separator, further hydrocarbons being removed from the catalyst by said stream during the transfer, separating the catalyst from the stream and said further hydrocarbons in the separator, and oxidatively regenerating the separated catalyst.

2. A method according to claim 1 wherein the stripping gas comprises steam.

3. A method according to claim 1 or claim 2 wherein said flowing stream of gas comprises steam, flue gas and/or air.

4. A method according to any preceding claim wherein the catalyst is oxidatively regenerated in a dense regeneration bed maintained in fluidised condition by regeneration gas.

5. A method according to any preceding claim wherein coking of the catalyst is brought about by fluidised contact at elevated temperature with a hydrocarbon feed in a cracking riser.

6. A method according to any preceding claim wherein the gas/solids separator is a cyclone.

7. A method according to any preceding claim wherein said stripped catalyst is subjected to acceleration by said flowing stream of gas.

8. A method according to any preceding claim wherein the stripped catalyst is transferred in the form of an upwardly flowing suspension of catalyst particles in a stream of lift gas in a lift pipe.

9. A method according to any preceding claim wherein during the transfer the stripped catalyst attains a velocity of at least 15.24 m/sec (50 ft/sec).

10. A method according to any preceding claim wherein the separating of the catalyst is carried out in more than one separator.

11. A method according to any preceding claim wherein said separating is carried out within a regeneration vessel.

12. A method according to claim 11 wherein the gaseous effluent from said separator or separators is isolated from regeneration effluent gases.

13. A method according to claim 11 wherein said separating is carried out in primary and secondary cyclones linked by a conduit into which regeneration effluent gases are admitted.

14. A fluid catalytic cracking regenerator, for regenerating spent fluid catalytic cracking catalyst from a cracking reactor in a regeneration zone, which comprises :
(i) a regeneration vessel for containing catalyst in a regeneration zone,
(ii) a combustion gas inlet for admitting combustion gas to the regeneration zone for oxidatively regenerating spent catalyst therein and maintaining the catalyst in a fluidized state,
(iii) an outlet for regeneration effluent gases formed by the oxidative regeneration of the catalyst,
(iv) a catalyst inlet for spent, stripped catalyst from a stripping zone of the cracking reactor,
(v) at least one gas/solids separator for separating spent stripped catalyst particles from entrained gases with its inlet connected to the catalyst inlet.

15. A regenerator according to claim 14 in which the separator is a cyclone separator.

9

16. A regenerator according to claim 14 or claim 15 in which each separator has a dipleg for passing separated catalyst into the regeneration zone.

17. A regenerator according to any of claims 14 to 16 which includes primary and secondary solids/gas separators, each primary separator having a gas outlet connected by a conduit to the inlet of a secondary separator for effecting a further separation of gases from solid catalyst particles.

18. A regenerator according to claim 17 in which each secondary separator has a gas outlet connected to the outlet for regeneration effluent gases.

19. A regenerator according to claim 17 in which the conduit connecting the gas outlet of the primary cyclone separator to the inlet of the secondary cyclone separator includes a vent for admission of regeneration effluent gases.

20. A regenerator according to any of claims 15 to 19 which includes a plurality of primary cyclone separators having inlets connected to the catalyst inlet and diplegs for passing separated spent catalyst particles into the regeneration zone at spaced positions across the cross section of the regenerator vessel.

21. A regenerator according to any of claims 14 to 20 wherein the regeneration zone is adapted to contain a dense fluidised bed of catalyst.

22. A regenerator according to any of claims 14 to 21 which is part of a fluid catalytic cracking unit in which cracking occurs in a riser cracking zone.

23. A regenerator according to claim 22 in which the riser discharges spent cracking catalyst into a reactor vessel the lower part of which constitutes a catalyst stripping zone.

## Ansprüche

1. Verfahren zur Regenerierung eines verkokten Wirbelschichtcrackkatalysators, das die Entfernung von Kohlenwasserstoffen aus dem Katalysator durch Kontakt mit Strippinggas, die Übertragung des abgestreiften Katalysators durch einen fließenden Gasstrom zu einem Gas/Feststoff-Separator, wobei während der Übertragung weitere Kohlenwasserstoffe durch den Strom vom Katalysator entfernt werden, die Abtrennung des Katalysators vom Strom und der weiteren Kohlenwasserstoffe im Separator und die oxidierende Regenerierung des abgetrennten Katalysators umfaßt.

2. Verfahren nach Anspruch 1, worin das Strippinggas Dampf umfaßt.

3. Verfahren nach Anspruch 1 oder 2, worin der fließende Strom des Gases Dampf, Abgas und/oder Luft umfaßt.

4. Verfahren nach einem der vorstehenden Ansprüche, worin der Katalysator in einem dichten Regenerierungsbett oxidierend regeneriert wird, das durch das Regenerierungsgas im Wirbelschichtzustand gehalten wird.

5. Verfahren nach einem der vorstehenden Ansprüche, worin die Verkokung des Katalysators durch Wirbelschichtkontakt mit einer Kohlenwasserstoffzufuhr bei erhöhter Temperatur im Crackriser hervorgerufen wird.

6. Verfahren nach einem der vorstehenden Ansprüche, worin der Gas/Feststoff-Separator ein Cyclon ist.

7. Verfahren nach einem der vorstehenden Ansprüche, worin der abgestreifte Katalysator durch den fließenden Gasstrom einer Beschleunigung unterzogen wird.

8. Verfahren nach einem der vorstehenden Ansprüche, worin der abgestreifte Katalysator in Form einer nach oben strömenden Suspension der Katalysatorpartikel in einem Strom eines Traggases in einem Förderrohr übertragen wird.

9. Verfahren nach einem der vorstehenden Ansprüche, worin während der Übertragung des abgestreiften Katalysators eine Geschwindigkeit von mindestens 15,24 m/s (50 ft/sec) erreicht wird.

10. Verfahren nach einem der vorstehenden Ansprüche, worin die Trennung des Katalysators in mehr als einem Separator durchgeführt wird.

11. Verfahren nach einem der vorstehenden Ansprüche, worin die Trennung innerhalb des Regenerierungsgefäßes durchgeführt wird.

12. Verfahren nach Anspruch 11, worin der gasförmige Abfluß aus dem Separator oder den Separatoren von den Abflußgasen der Regenerierung isoliert ist.

13. Verfahren nach Anspruch 11, worin die Trennung in primären und sekundären Zyklonen durchgeführt wird, die durch eine Leitung verbunden sind, in die die Abflußgase der Regenerierung eingelassen werden.

14. Regenerator für das katalytische Wirbelschichtcracken zur Regenerierung des verbrauchten Katalysators vom katalytischen Wirbelschichtcracken aus dem Crackreaktor in einer Regenerierungszone, welches umfaßt :

(i) ein Regenerierungsgefäß, das den Katalysator in der Regenerierungszone enthält,

(ii) einen Verbrennungsgaseinlaß zum Einlassen des Verbrennungsgases in die Regenerierungszone, um den verbrauchten Katalysator darin oxidierend zu regenerieren und den Katalysator im Wirbelschichtzustand zu halten,

(iii) einen Auslaß für die Abflußgase der Regenerierung, die durch oxidierende Regenerierung des Katalysators gebildet wurden,

(iv) einen Katalysatoreinlaß für den verbrauchten abgestreiften Katalysator von der Strippingzone des Crackreaktors,

(v) mindestens einen Gas/Feststoff-Separator zur Abtrennung der verbrauchten abgestreiften Katalysatorpartikel von den mitgerissenen Gasen, wobei dessen Einlaß an den Katalysatoreinlaß verbunden ist.

15. Regenerator nach Anspruch 14, worin der Separator ein Zyklonabscheider ist.

16. Regenerator nach Anspruch 14 oder 15, worin jeder Separator eine Tauchleitung hat, um den abgetrennten Katalysator in die Regenerierungszone zu leiten.

17. Regenerator nach einem der Ansprüche 14 bis 16, der primäre und sekundäre Feststoff/Gas-Separatoren umfaßt, wobei jeder primäre Separator einen Gasauslaß aufweist, der durch eine Leitung mit dem Einlaß des sekundären Separators verbunden ist, um eine weitere Abtrennung der Gase von den festen Katalysatorpartikeln durchzuführen.

18. Regenerator nach Anspruch 17, worin jeder sekundäre Separator einen Gasauslaß hat, der an den Auslaß für die Abflußgase der Regenerierung verbunden ist.

19. Regenerator nach Anspruch 17, worin die Leitung, die den Gasauslaß des primären Zyklonabscheiders mit dem Einlaß des sekundären Zyklonabscheiders verbindet, ein Lüftungsloch umfaßt, um die Abflußgase der Regenerierung einzulassen.

20. Regenerator nach einem der Ansprüche 15 bis 19, der eine Vielzahl primärer Cyclonabscheider aufweist, die Einlässe, die mit dem Katalysatoreinlaß verbunden sind, und Tauchleitungen aufweisen, um die abgetrennten verbrauchten Katalysatorpartikel an räumlich getrennten Positionen entlang des Querschnitts der Regeneratorgefässes in die Regenerierungszone einzuleiten.

21. Regenerator nach einem der Ansprüche 14 bis 20, worin die Regenerierungszone so gestaltet ist, daß sie ein dichtes Wirbelschichtbett des Katalysators enthält.

22. Regenerator nach einem der Ansprüche 14 bis 21, der ein Teil einer katalytischen Wirbelschichtcrackanlage ist, worin das Cracken in der Risercrackzone auftritt.

23. Regenerator nach Anspruch 22, worin der Riser den verbrauchten Katalysator in ein Reaktorgefäß abgibt, dessen unterer Teil die Katalysatorabstreifzone bildet.

## Revendications

1. Un procédé de régénération d'un catalyseur de craquage fluide cokéifié qui consiste à éliminer les hydrocarbures contenus sur le catalyseur par contact avec un gaz d'entraînement, à transférer le catalyseur ayant subi cette extraction à l'aide d'un courant gazeux d'entraînement vers un séparateur gaz/solides, les hydrocarbures étant en outre retirés du catalyseur par ledit courant durant le transfert, à séparer le catalyseur de ce courant et desdits hydrocarbures dans le séparateur, puis à régénérer de façon oxydante le catalyseur séparé.

2. Un procédé selon la revendication 1, dans lequel le gaz d'entraînement est formé de vapeur d'eau.

3. Un procédé selon la revendication 1 ou la revendication 2, dans lequel le courant de gaz d'entraînement est formé de vapeur d'eau, d'un affluent gazeux et/ou d'air.

4. Un procédé selon l'une quelconque des revendications précédentes dans lequel le catalyseur est régénéré de façon oxydante dana un lit de régénération dense maintenu à l'état fluidisé par un gaz de régénération.

5. Un procédé selon l'une quelconque des revendications précédentes dans lequel le coke fixé sur le catalyseur est entraîné au cours du contact fluidisé à température élevée, par une charge hydrocarbonée, dans une colonne de craquage ascendante.

6. Un procédé selon l'une quelconque des revendications précédentes, dans lequel le séparateur gaz/solides est un cyclone.

7. Un procédé selon l'une quelconque des revendications précédentes, dans lequel le catalyseur ayant subi l'extraction est soumis à une accélération produite par ledit courant de gaz d'entraînement.

8. Un procédé selon l'une quelconque des revendications précédentes, dans lequel le catalyseur ayant subi l'entraînement est transféré sous forme d'une suspension d'entraînement ascendante de particules de catalyseur dans un courant d'un gaz d'entraînement dans un conduit ascendant.

9. Un procédé selon l'une quelconque des revendications précédents, dans lequel durant le transfert le catalyseur entraîné atteint une vitesse d'au moins 15,24 m/s (50 ft/s).

10. Un procédé selon l'une quelconque des revendications précédentes dans lequel la séparation du catalyseur est mise en oeuvre dans plus d'un séparateur.

11. Un procédé selon l'une quelconque des revendications précédentes dans lequel ladite séparation est mise en oeuvre dans un récipient de régénération.

12. Un procédé selon la revendication 11, dans lequel l'effluent gazeux provenant du ou desdits séparateurs est isolé des effluents gazeux de la régénération.

13. Un procédé selon la revendication 11, dans lequel ladite séparation est effectuée dans les cyclones primaires et secondaires liés entre eux par un conduit dans lequel les effluents gazeux de la régénération sont admis.

14. Un régénérateur de craquage catalytique fluide pour la régénération d'un catalyseur de craquage catalytique fluide usé provenant d'un réacteur de craquage dans une zone de régénération qui comprend :

(i) un récipient de régénération pour contenir le catalyseur dans une zone de régénération ;

(ii) un conduit de gaz de combustion pour faire pénétrer le gaz de combustion dans la zone de régénération afin de régénérer de façon oxydante les catalyseurs usés qui s'y trouvent et à maintenir le catalyseur à l'état fluidisé ;

(iii) une sortie des effluents gazeux de la régénération formés par la régénération oxydante du catalyseur;

(iv) une entrée de catalyseur pour le catalyseur usé entraîné depuis une zone d'entraînement du réacteur de craquage ;

(v) au moins un séparateur gaz/solides pour séparer les particules de catalyseur entraînées usées des gaz qui les entraînent, la sortie de ce séparateur étant reliée à l'entrée du catalyseur.

15. Un régénérateur selon la revendication 14, dans lequel le séparateur est un séparateur cyclonique.

16. Un régénérateur selon la revendication 14 et la revendication 15, dans lequel chaque séparateur comporte un dipleg ou jambe de retour permettant de conduire la catalyseur séparé dans la zone de régénération.

17. Un régénérateur selon l'une quelconque des revendications 14 à 16 gui comprend des séparateurs solides/gaz primaires et secondaires, chaque séparateur primaire présentant une entrée de gaz reliée par un conduit à l'entrée du séparateur secondaire pour effectuer une séparation ultérieure des particules de catalyseur solide entraînées par les gaz.

18. Un séparateur selon la revendication 17, dans lequel chaque séparateur secondaire présente une sortie de gaz reliée à la sortie des effluents gazeux de la régénération.

19. Un régénérateur selon la revendication 17, dans lequel le conduit reliant la sortie de gaz du séparateur cyclonique primaire à l'entrée du séparateur cyclonique secondaire inclut un conduit pour l'admission des effluents gazeux de la régénération.

20. Un régénérateur selon l'une quelconque des revendications 15 à 19, qui inclut une pluralité de séparateurs cycloniques primaires présentant des entrées reliées à l'entrée du catalyseur et aux diplegs pour faire passer les particules de catalyseur usées séparées dans la zone de régénération en diverses positions espacées le long de la section du récipient de régénération.

21. Un régénérateur selon l'une quelconque des revendications 14 à 20, dans lequel la zone de régénération est adaptée pour contenir un lit fluidisé de catalyseur.

22. Un régénérateur selon l'une quelconque des revendications 14 à 21, qui consiste en une partie de l'unité de craquage catalytique fluide dans laquelle le craquage se produit dans une zone de craquage ascendante.

23. Un régénérateur selon la revendication 22, dans lequel le catalyseur de craquage usé est amené par le tube ascendant dans un récipient de réaction ou réacteur dont la partie inférieure constitue une zone d'entraînement du catalyseur.

EP 0 309 244 B1

FIG. 1

13

FIG. 2

# FIG. 3

# FIG. 3A

FIG. 4